# EUROPÄISCHE PATENTSCHRIFT

(11) **EP 3 620 333 B1**
(45) Veröffentlichungstag und Bekanntmachung des Hinweises auf die Patenterteilung: **05.05.2021**
(21) Anmeldenummer: 19190955.5
(22) Anmeldetag: 09.08.2019
(51) Int. Cl.: B60S 3/04

(54) **BEHEIZTER DECKENKREISEL FÜR DIE HD-WÄSCHE VON FAHRZEUGEN**
HEATED CEILING BOOM FOR THE HIGH PRESSURE WASHING OF VEHICLES
RAMPE PLAFONNIÈRE CHAUFFÉE POUR LE LAVAGE HAUTE PRESSION DES VÉHICULES

(30) Priorität: 10.09.2018 DE 102018121959
(43) Veröffentlichungstag der Anmeldung: 11.03.2020
(73) Patentinhaber: Mosmatic AG, 9126 Necker (CH)
(72) Erfinder: RIEBEN, Patrick, 9126 Necker (CH); SANTORO, Daniel, 9126 Necker (CH)
(74) Vertreter: Riebling, Peter

(56) Entgegenhaltungen:
- DE-A1- 10 060 316
- DE-U1- 9 107 952
- JP-A- H08 247 346

## Beschreibung

Die Erfindung betrifft einen elektrisch beheizbaren Deckenkreisel für die HD-Wäsche von Fahrzeuge nach dem Oberbegriff des Patentanspruches 1.

Deckenkreisel nach dem Oberbegriff des Patentanspruchs 1 sind aus den auf den gleichen Anmelder zurückgehenden Druckschriften DE 10 2007 022 260A1, DE 196 42 847 C2, DE 102 41 829 A1 oder DE 94 14 483 U1 bekannt. Sie sind in der Regel stationär in einem Gebäude, z.B. einer Halle, einer Garage oder dergleichen an der Decke befestigt, und vermögen, einen einseitig an einem Drehgelenk angeschlossenen Tragarm um einen Winkel von mindestens 360° zu drehen. Sie werden für die Fahrzeugwäsche von Luft-, Wasser- und Landfahrzeugen verwendet, wobei der einfacheren Beschreibung wegen in der folgenden Beschreibung nur von der Anwendung eines solchen Deckenkreisels für die Fahrzeugwäsche von Kraftfahrzeugen in Hallen und dergleichen ausgegangen wird.

Die Erfindung ist jedoch nicht auf die Fahrzeugwäsche in Hallen beschränkt, weil der Deckenkreisel an beliebigen festen Deckenflächen angeordnet werden kann und zur Durchführung eines Hochdruckmediums geeignet ist.

Derartige Deckenkreisel sind an der Deckenseite mit einem Anschluss für ein Hochdruckmedium versehen, wobei dieses Hochdruckmedium in der Regel Wasser ist. Ebenso ist ein solcher Deckenkreisel für eine Wandmontage geeignet, und das Hochdruckmedium ist in der Regel ein Wasserstrom, der unter einem Druck von vorzugsweise zwischen 100 und 150 bar liegt. Eine Verwendung des beizbaren Deckenkreisels im Niederdruckbereich von z. B. 2 bar ist ebenso möglich. Die Ausgangsseite solcher bekannten Deckenkreisel ist mit einer Hochdrucklanze oder mit einer Waschbürste oder dergleichen verbunden, um ein in der Halle aufgestelltes Fahrzeug waschen zu können.

Statt der Anordnung eines Deckenkreisels in einer Halle ist selbstverständlich auch eine Montage eines solchen bekannten Deckenkreisels im Freien an geeigneten Befestigungsflächen möglich.

Die bekannten Deckenkreisel führen demnach ein in einem HD-Schlauch geführtes Hochdruckmedium durch mindestens einen Tragarm hindurch, wobei an der decken- oder wandseitigen Anschlussseite das Hochdruckmedium eingeführt wird und an der Ausgangsseite das Hochdruckmedium einem Waschgerät zugeführt wird, z. B. einer Hochdruckpistole, einer Lanze, einer Waschbürste und dergleichen mehr. Derartige Deckenkreisel werden in der Regel im Freien verwendet, d. h. in unbeheizten Umgebungen, und damit besteht der Nachteil, dass eine Einfriergefahr für das im Deckenkreisel geführte Hochdruckmedium besteht.

Dabei ist es z. B. aus der DE 10 2007 022 260 A1 bekannt, ein Hochdruckmedium über ein deckenseitiges Schwenklager in den am Schwenklager ausgangsseitig angeordneten Hochdruckschlauch einzuführen, wobei die Ausgangsseite des Hochdruckschlauches mit dem oben beschriebenen Waschgerät verbunden ist.

Es besteht demnach Einfriergefahr für das im Hochdruckschlauch geführte Hochdruckmedium, was verhindert werden soll.

Zu diesem Zweck ist es beispielsweise mit der DE 91 07 952 U1 bekannt, beheizbare Deckenkreisel vorzusehen, bei denen die Beheizung jedoch am Außenumfang des Hochdruckschlauches stattfindet. Es handelt sich demnach um einen Heizmantel, der möglichst wärmeleitend mit dem Außenumfang des Hochdruckschlauches verbunden ist, um so bei geeigneter stromgestützter Beheizung des Heizmantels den Außenumfang des Hochdruckschlauches auf eine Temperatur zu halten, die höher als die Frosttemperatur ist.

Nachteil der bekannten Heizmantel-Beheizung ist jedoch, dass eine schlechte Wärmeübertragung des Heizmantels über den Außenumfang des HD-Schlauches auf das im HD-Schlauch geführte Hochdruckmedium stattfindet, wodurch die Heizwirkung gering ist. Dementsprechend ist ein hoher Stromverbrauch zu vergegenwärtigen, weil der Heizmantel auf hohe Temperaturen gehalten werden muss, um das Hochdruckmedium im Innenraum des Hochdruckschlauches auf eine über der Frosttemperatur liegende Temperatur zu beheizen.

Weiterer Nachteil ist der betriebsanfällige elektrische Anschluss des Heizmantels, weil die Kabelzuführung in den Heizmantel am drehenden Teil des Tragarmes eingeführt werden muss, was bedeutet, dass der Tragarm auf einen Drehwinkel von nicht mehr als 360° begrenzt ist, um ein Abscheren der Stromzuführungsdrähte in den Heizmantel zu vermeiden. Damit besteht neben der eingeschränkten Drehbarkeit des Deckenkreisels um weniger als 360° auch noch der weitere Nachteil, dass die Stromzuführungen in den Heizmantel bruchanfällig sind und bei Bruch dieser Stromzuführung schwere Unfälle passieren können.

Die Erfindung hat sich deshalb ausgehend von der DE 91 07 952 U1 die Aufgabe gestellt, einen beheizbaren Deckenkreisel der eingangs genannten Art so weiterzubilden, dass bei voller Drehbarkeit von mehr als 360° ein betriebssicherer Betrieb der Heizung und/oder anderer Zusatzelemente ermöglicht ist.

Zur Lösung der gestellten Aufgabe ist die Erfindung durch die technische Lehre des Anspruches 1 gekennzeichnet.

Bevorzugtes Merkmal der Erfindung ist, dass das Heizkabel im Innenraum des HD-Schlauches geführt ist. Somit ist gewährleistet, dass das Heizkabel unmittelbar von dem Hochdruckmedium umströmt ist und somit eine optimale Wärmeübertragung der Wärmeleistung des Heizkabels unmittelbar auf das HD-Medium ohne Zwischenschaltung eines Schlauchmantels - wie beim Stand der Technik bekannt - stattfindet.

Die bevorzugte technische Lehre der Erfindung nach der ersten Ausführung setzt voraus, dass das Heizkabel druckdicht in den Innenraum des HD-Schlauches ein- und gegebenenfalls auch ausgeführt wird. In einer bevorzugten Weiterbildung ist die Konstruktion des Deckenkreisels so gestaltet, dass es - zusammen mit seinem Heizkabel - um beliebig Vielfache von 360 Grad drehbar ist.

Dabei wird es bevorzugt, wenn der Deckenkreisel mit seinem deckenseitig angeordneten Schwenklager drehfest mit einem Rotationsstromverteiler verbunden ist, mit dem es gelingt, das Heizkabel und/oder zusätzliche Signalkabel von der Deckenseite her in den drehbaren Teil des Deckenkreisels einzuführen, die dann abgedichtet koaxial in den Hochdruckschlauch eingeführt werden.

Die Erfindung ist im Übrigen nicht auf die Anordnung eines einzigen beheizbaren Deckenkreisels beschränkt. In der Art, wie es in der DE 102 41 829 A1 beschrieben ist. Es ist demnach vorgesehen, dass auch bei Deckenkreiseln mit Doppel-Tragarmen nach der DE 91 07 952 U1 jeweils eine innenliegende Beheizung des jeweiligen HD-Schlauches im Sinne der vorliegenden Erfindung stattfindet. Es ist dann jedem Tragarm ein eigener Rotationsstromverteiler zugeordnet. Der einfacheren Beschreibung wegen wird jedoch in der folgenden Beschreibung nur die innenliegende Beheizung eines einfachen Tragarms beschrieben.

In einer bevorzugten Ausgestaltung der Erfindung ist vorgesehen, dass die Beheizung des Hochdruckschlauches dergestalt erfolgt, dass an der Deckenseite des Deckenkreisels mindestens ein Stromkabel in den Rotationsstromverteiler eingeführt wird, das ausgangsseitig am drehbaren Teil des Rotationsstromverteilers herausgeleitet wird, um dann abgedichtet in den drehbaren Teil des Deckenkreisels in den dort einmündenden HD-Schlauch eingeführt zu werden.

Diese Ausführung wird bevorzugt, denn es ist mit einem innen liegenden, im Innenraum des HD-Schlauches mitgeführten Heizkabel erstmals möglich, mit geringem Stromverbrauch und hoher Wärmeübertragungsleistung das im HD-Schlauch geführte Hochdruckmedium mit hohem Wirkungsgrad aufzuheizen.

Mit der Einführung eines Heizkabels in den Innenraum des HD-Schlauches wird demnach der Vorteil eines geringeren Stromverbrauches, einer besseren Wärmeübertragung, einer schnelleren Aufheizung des HD-Mediums erreicht und außerdem wird erreicht, dass der Deckenkreisel um mehr als 360° gedreht werden kann, was beim Stand der Technik bezüglich der bekannten Heizmantel-Beheizung nicht möglich war.

Die mehrfache Drehbarkeit des Deckenkreisels mit seinem Tragarm und dem am Tragarm angeordneten HD-Schlauch wird durch den Rotationsstromverteiler ermöglicht, der koaxial und drehfest am Außenumfang des Schwenklagers angeordnet ist.

In einer bevorzugten Ausführungsform besteht der Rotationsstromverteiler aus einem Innenring, der drehfest mit der stationären, nicht drehbaren Lagerwelle des Deckenkreisels verbunden ist und ferner aus einem koaxial zum Innenring drehbar angeordneten Außenring, der drehfest mit dem drehbaren Teil des Deckenkreisels, nämlich dem Tragarm und allen sonstigen drehbaren Teilen verbunden ist.

Der Innenring und der Außenring sind über Schleifringkontakte miteinander verbunden, wobei die Schleifringkontakte am Umfang verteilte, stromleitende Sektorbereiche bilden und so in der Lage sind, eine mehradrige Stromübertragung über den Rotationsstromverteiler an die Ausgangsseite des Rotationsstromverteilers zu ermöglichen, die drehfest mit dem drehbaren Teil des Drehgelenks verbunden ist.

Wie eingangs ausgeführt, gibt es für die Ausgangsseite des Rotationsstromverteilers, der mit dem drehbaren Teil des Deckenkreisels verbunden ist, mehrere Ausführungsformen:
1. In einer ersten Ausführungsform ist an der Ausgangsseite des Rotationsstromverteilers eine mehradrige Kabelausführung vorgesehen, die direkt mit dem mindestens zweiadrigen Heizkabel elektrisch leitfähig verbunden ist. In diesem Fall wird das Heizkabel über einen geeigneten hochdruckdichten HD-Kabelanschluss in ein Drehgelenk eingeführt, an dessen anderen Seite auch der Anschluss für den HD-Schlauch ansetzt, so dass es bei der Durchführung des Heizkabels und bei der Einführung in das Drehgelenk nun erstmals möglich ist, das Heizkabel abgedichtet im Innenraum des HD-Schlauches zu führen.
2. Statt der Einführung des Heizkabels in den Innenraum des HD-Schlauches ist es in einer anderen Ausführungsform vorgesehen, dass am Ausgang des Rotationsstromverteilers wiederum mehrere Kabel herausgeführt werden, die aber dann einen den HD-Schlauch am Außenumfang umfangenden Heizmantel zugeführt werden.
3. In einer dritten Ausführungsform ist es vorgesehen, dass statt der mehradrigen Stromkabel zur Stromversorgung des innen liegenden oder des außen liegenden Heizkabels oder des Heizmantels vorgesehen ist, dass zusätzliche Signalkabel verwendet werden, die an den Außenumfang des HD-Schlauches herangeführt werden und diesen umgeben, so dass es erstmals möglich ist, mit dem sich drehenden HD-Schlauch auch Signalkabel mitzuführen, die am Außenumfang des HD-Schlauches, vorzugsweise in dessen Mantel eingebettet, angeordnet sind.
   Es ist selbstverständlich möglich, den Schlauchmantel des HD-Schlauches so auszubilden, dass dort direkt leitfähige Bahnen vorgesehen werden können, um eine Signalübertragung vom Ausgang des Rotationsstromverteilers über den HD-Schlauch in Richtung auf das Waschgerät zu ermöglichen.
4. In einer Weiterbildung der Erfindung ist es vorgesehen, dass neben der Verwendung eines Heizkabels, welches bevorzugt innen liegend im HD-Schlauch, aber auch außen liegend am HD-Schlauch angeordnet ist, noch zusätzlich eine mehradrige Signalübertragung stattfindet. Es ist also auch eine Kombination von Heizung und Signalübertragung im Rahmen der vorliegenden Erfindung vorgesehen.
   Solche Signalkabel können z. B. für die Beleuchtung von LED-Elementen vorgesehen werden, die längs am Tragarm angeordnet sind oder die den HD-Schlauch umgeben oder die für eine Strom- oder Signalversorgung des an dem HD-Schlauch angeschlossenen Waschgerätes sorgen.
   In der bevorzugten Ausführungsform, bei welcher das Heizkabel druckdicht in den Innenraum des HD-Schlauches eingeführt ist wird vorausgesetzt, dass der HD-Schlauch hochdruckdicht über ein geeignetes HD-Kabelanschluss-Drehgelenk eingeführt wird, an dessen Ausgangsseite gleichzeitig auch die Eingangsseite des HD-Schlauches hochdruckdicht angeschlossen ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Seitenansicht eines Deckenkreisels nach der Erfindung
- Figur 2:: die Draufsicht auf den Deckenkreisel nach Figur 1
- Figur 3:: ein Schnitt durch das Drehgelenk des Deckenkreisels mit Rotationsstromverteiler
- Figur 4:: ein vergrößerter Schnitt durch das Drehgelenk
- Figur 5:: ein Schnitt gemäß der Linie V-V durch den Tragarm des Deckenkreisels

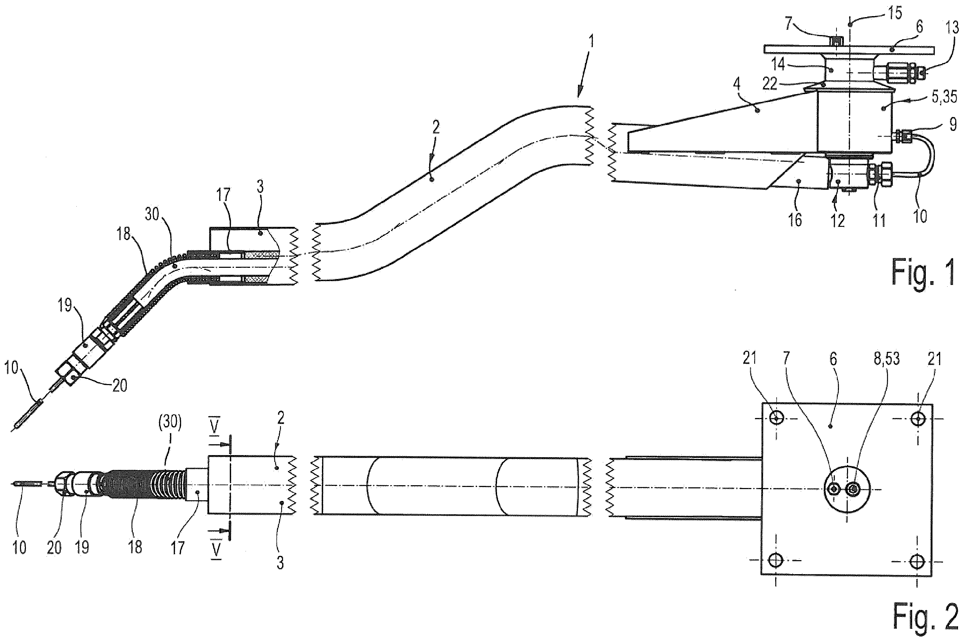

In den Figuren 1 und 2 ist ein Deckenkreisel 1 dargestellt, der in der bevorzugten Ausführungsform mit einem innen liegenden Heizkabel 10 ausgerüstet ist, welches im Innenraum des HD-Schlauches 30 geführt ist.

Die Erfindung ist - wie oben ausgeführt - nicht auf dieses Ausführungsbeispiel beschränkt.

Ausgehend von einer Deckenplatte 6, die mit Hilfe von Befestigungsschrauben, welche durch Befestigungsbohrungen 21 hindurch greifen, an einer Decke befestigt ist, ist an der Deckenplatte 6 drehfest eine Lagerwelle 14 angeschlossen.

Gemäß den Figuren 1 und 2 mündet die Lagerwelle 14 durch die Deckenplatte 6 hindurch und weist dort eine Anschlusshülse 7 für die Einführung eines Elektrokabels auf und ferner die Anschlusshülse 8 für die Einführung des Hochdruckmediums.

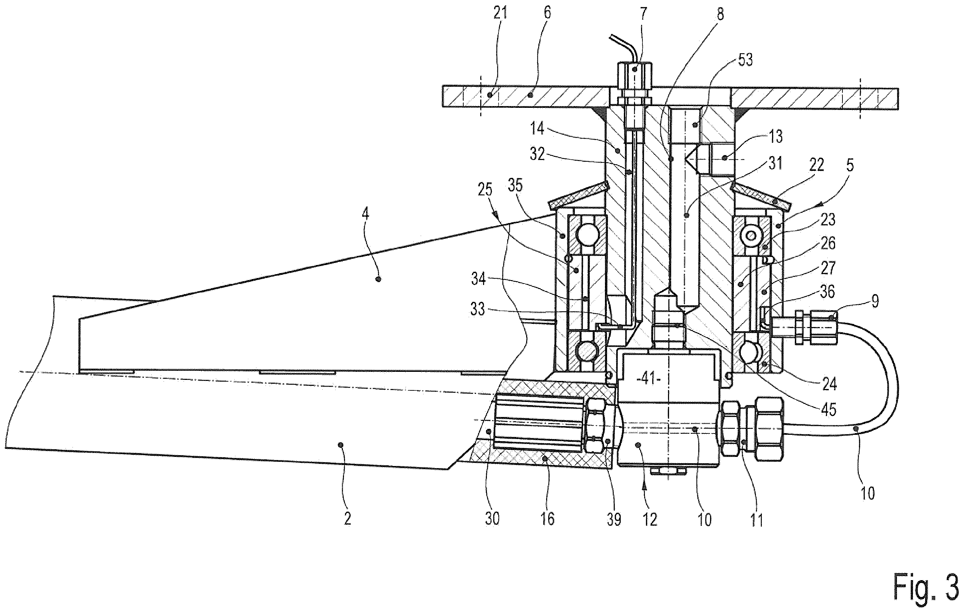

Statt der Einführung eines HD-Mediums an der Anschlusshülse 8 kann dort auch gemäß Figur 3 ein Kanal 53 für die Aufnahme einer Heizpatrone vorgesehen sein, um bei elektrischer Beheizung der Heizpatrone den Hochdruckstrom aufzuheizen.

In diesem Fall wird das Hochdruckmedium gemäß Figur 1 an der Seite über einen geeigneten HD-Wasseranschluss 13 eingeführt und umströmt die Heizpatrone.

Wie ausgeführt, ist die Lagerwelle 14 fest mit der Deckenplatte 6 verbunden und führt durch ein Schwenklager 5, welches insgesamt aus zwei unterschiedlichen Lagerteilen besteht, nämlich aus einem Rotationsstromverteiler 25 und einem darunter ansetzenden Drehgelenk 12.

Die Einzelheiten des Aufbaus des Schwenklagers 5 werden später beschrieben.

Das Schwenklager 5 weist ein außen liegendes Mantelrohr 35 auf, welches mit dem drehbaren Teil des Deckenkreisels 1 verbunden ist, und am Mantelrohr 35 greifen zwei zueinander parallele Seitenplatten 4 an, die zwischen sich einen Tragarm 2 aufnehmen, der bevorzugt aus einem Metallmaterial besteht.

Im gezeigten Ausführungsbeispiel ist der Tragarm 2 als metallisches Rundrohr ausgebildet, worauf die Erfindung nicht beschränkt ist. Es können auch andere Profilformen eines Tragarmes 2 verwendet werden, wie z. B. eine Tragstrebe oder ein Strebenaufbau, so dass es nicht notwendig ist, im Innenraum des Tragarmes 2 den Hochdruckschlauch 30 zu führen. Er kann somit auch am Außenumfang eines Tragarms geführt sein.

Im gezeigten Ausführungsbeispiel besteht der Tragarm 2 jedoch aus einem Metall-Rundrohr 3, welches an seiner vorderen Mündungsseite mit einem Führungsrohr 17 verbunden ist, durch welches der Hochdruckschlauch 30 hindurch geführt ist.

An der Ausgangsseite des Führungsrohres 17 ist das eine Ende einer Entlastungszugfeder 18 befestigt, deren anderes Ende fest mit einem Drehgelenk 19 verbunden ist, durch welches der Hochdruckschlauch 30 hindurchgeführt ist.

Am Anschlussnippel 20 kann ein geeignetes Waschgerät, wie z. B. eine Waschbürste, eine Hochdruckpistole oder eine Waschlanze angeschlossen werden, wobei für diesen Anschluss noch ein Zwischenschlauch verwendet wird.

Das Waschgerät wird demnach nicht unmittelbar an den Anschlussnippel 20 angeschlossen, sondern es wird dort ein Verbindungsschlauch angeschlossen, in den über eine beliebige Länge das Heizkabel 10 hineinreicht. In einer anderen Ausführung kann dass Heizkabel 10 jedoch im Bereich des Drehgelenks 19 oder davor enden.

Das Heizkabel 10 kann jedoch auch länger als der (nicht gezeigte) Anschlussschlauch sein und mit in das Waschgerät eingeführt werden, um dieses ebenfalls zu beheizen.

Dies ist ein wesentlicher Vorteil der Erfindung gegenüber dem Stand der Technik, weil es damit erstmals gelingt, mit einem im Innenraum des HD-Schlauches 30 geführten Heizkabel 10 nicht nur den Deckenkreisel 1 und den dort geführten Teil des HD-Schlauches 30 zu beheizen, sondern auch noch den am Drehgelenk 19 anschließenden Anschlussschlauch und sogar noch das am Anschlussschlauch anschließende Waschgerät.

Bei der Erfindung ist es demnach bevorzugt, dass am deckenseitigen Schwenklager 5 ein Anschlussnippel 9 angeordnet ist, über den das mehradrige Stromkabel herausgeführt wird, um elektrisch leitfähig mit den Kabeladern 52 des Heizkabels 10 verbunden zu werden.

In Figur 1 ist noch dargestellt, dass der HD-Schlauch 30 mindestens über die Länge des Deckenkreisels noch mit einem Isolationsschlauch 16 umgeben ist, um eine zusätzliche Wärmeisolation zu erreichen.

Ferner ist gem. Fig. 3 eine obere Schutzkappe 22 vorgesehen, um ein Eindringen von Wasser von oben in das Schwenklager 5 zu vermeiden.

Die Drehachse des Deckenkreisels 1 ist insgesamt mit 15 angegeben.

Aus Figur 3 ergeben sich weitere Einzelheiten des Schwenklagers 5 in Verbindung mit dem darunter ansetzenden Drehgelenk 12.

Ausgehend von der Deckenplatte 6 ist der Kanal 53 für den Einsatz einer Heizpatrone vorgesehen, wobei senkrecht in den Kanal der HD-Wasseranschluss 13 mündet, so dass bei Einsatz einer Heizpatrone in den Kanal 53 das HD-Medium aufgeheizt werden kann.

Die Anschlusshülse 8 für die Einführung des HD-Wassers kann deshalb mehrere Funktionen ausüben.

Das Schwenkgelenk 5 besteht im Wesentlichen aus einem außen liegenden Mantelrohr 35, welches drehfest mit dem Tragarm 2 und den Seitenplatten 4 verbunden ist.

In Figur 3 sind zwei im Abstand voneinander angeordnete Radiallager 23, 24 vorgesehen, deren innerer Lagerring drehfest mit der stationären Lagerwelle 14 verbunden ist, während der Außenring fest mit dem Mantelrohr 35 verbunden ist. Im Innenraum des Mantelrohrs 35 ist der Rotationsstromverteiler 25 angeordnet, der im Wesentlichen aus einem Innenring 26 besteht, der drehfest über eine zugeordnete Blockierkugel 29 mit der Lagerwelle 14 verbunden ist, während der Außenring 27 drehfest über eine einstellbare Madenschraube 28 mit dem drehenden Mantelrohr 35 verbunden ist.

Die Stromzuführung über ein mehradriges Kabel erfolgt über die obere Anschlusshülse 7 in eine Längsbohrung 32, die etwa parallel zum Wasserkanal 31 geführt ist.

Die Längsbohrung 32 führt eine Anzahl von Kabeln mit sich, wobei der radiale Teil eines Kabelstrangs 33 im Einführungsbereich am Innenring 26 dargestellt ist.

Der Innenring 26 ist mit dem Außenring 27 elektrisch leitfähig über einen ringförmigen, flachen Schleifring 34 verbunden, wobei über den Schleifring 34 und dort berührend angeordnete elektrische Kontakte eine mehradrige Stromzuführung in einen ausgangsseitig am Außenring 27 angeordneten Kabelstrang 36 erfolgt. Die Schleifringe können z.B. aus elektrisch voneinander isolierten kreisringförmigen Sektorbereichen bestehen, die elektrisch leitfähig sind, wobei auf jedem Sektorbereich z.B. federbelastete Kontaktstifte aufsetzen, die mit den elektrischen Zuleitungen verbunden sind.

Im Bereich des Anschlussnippels 9 erfolgt die Kontaktierung des mindestens zweiadrigen Heizkabels 10 mit den von den Schleifringkontakten abgehenden Kabeln, welches gemäß der Darstellung in Figur 3 nun abgedichtet aus dem Anschlussnippel 9 herausgeführt ist, wobei der Abdichtung nur lediglich wasserdicht sein muss, jedoch nicht hochdruckdicht.

In anderer Weise erfolgt die druckdichte Einführung des Heizkabels 10 über einen hochdruckdichten HD-Kabelanschluss 11 in das untere Drehgelenk 12, wo - gemäß der schematisierten Darstellung in Figur 3 - das Heizkabel 30 nunmehr durch das Drehgelenk 12 hindurchgeführt und koaxial in den Innenraum des HD-Schlauches 30 eingeführt ist.

Zu diesem Zweck ist der HD-Schlauch mit einem geeigneten Anschlussnippel an der Ausströmöffnung 39 des Drehgelenks 12 angeschlossen, ebenso ist der HD-Kabelanschluss 11 so ausgebildet, dass kein HD-Medium nach außen dringen kann.

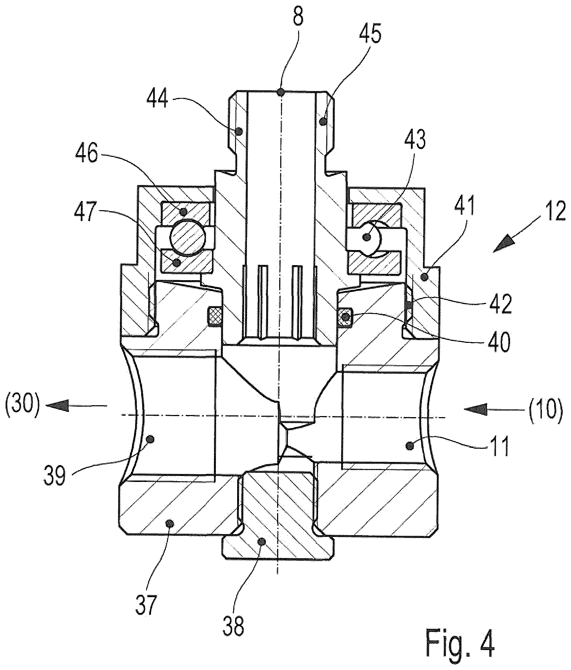

In Figur 4 wird das Drehgelenk 12 nach Figur 3 näher beschrieben. Es besteht im Wesentlichen aus einem sich drehenden Gehäuse 37, an dem rechtsseitig der Anschluss für den HD-Kabelanschluss 11 vorgesehen ist und linksseitig die Ausströmöffnung 39 für den Anschluss des HD-Schlauches 30.

Das Gehäuse 37 ist etwa hülsenförmig ausgebildet und legt sich abgedichtet mit einem O-Ring 40 am Außenumfang der feststehenden Schraubhülse 45 an.

Die Schraubhülse 45 weist einen Schraubanschluss 44 auf, mit dem - gemäß Figur 3 - das Drehgelenk 12 mit der Lagerwelle 14 verbunden ist.

Das Drehgelenk 12 besteht gemäß Figur 4 aus einem Axiallager 43, welches zwei voneinander getrennte Lagerringe 46, 47 ausbildet. Zwischen den Lagerringen 46, 47 sind bekannte Wälzkörper, z.B. Kugeln, Rollen oder dgl. angeordnet.

Der obere Lagerring 46 ist drehfest über eine Schraubverbindung 42 mit dem Gehäuse 37 des Drehgelenks 12 verbunden, während der andere Lagerring 47 drehfest mit der Schraubhülse 45 und diese wiederum drehfest mit der Lagerwelle 14 verbunden ist.

Zur besseren Montage ist noch vorgesehen, dass an der Unterseite des Gehäuses 37 ein Verschlussstopfen 38 angeordnet ist, um die Schraubhülse 45 auf die Lagerwelle 14 aufschrauben zu können.

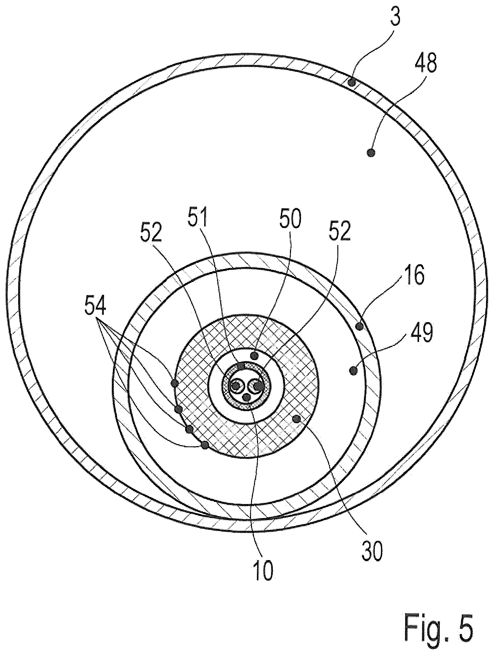

In Figur 5 ist ein Schnitt durch den Tragarm 2 dargestellt, der im gezeigten Ausführungsbeispiel als Rundrohr 3 ausgebildet ist.

Im Hohlraum 48 des Rundrohrs 3 ist ein Isolationsschlauch 16 angeordnet, der in seinem Innenraum 49 den HD-Schlauch 30 aufnimmt, der wiederum in seinem Innenraum 50 das mit mehreren Kabeladern 52 versehene Heizkabel 10 aufnimmt.

Damit ist das Heizkabel 10 frei im Innenraum des HD-Schlauches 30 geführt und wird von dem HD-Medium umströmt. Es bildet dabei kein Strömungshindernis, weil sein Querschnitt wesentlich kleiner ist als der Innenquerschnitt des HD-Schlauches.

Statt einer zweiadrigen Kabelader 52 können auch mehrere Adern im Innenraum des Heizkabels 10 geführt sein. Das Heizkabel 10 weist bevorzugt einen Isolationsmantel 51 auf.

Es kann vorgesehen sein, dass der Isolationsschlauch 16 den Außenumfang des HD-Schlauches 30 formschlüssig und ohne Bildung eines abstandsbildenden Innenraums 49 umschließt.

In der Beschreibungseinleitung wurde erwähnt, dass neben der Innenführung des Heizkabels 10 auch eine Signalführung am Außenumfang des HD-Schlauches vorgesehen sein kann.

In diesem Fall können gemäß Figur 5 eine Anzahl von Signalkabeln 54 am Außenumfang des HD-Schlauches mitgeführt werden, wobei diese Signalkabel entweder ebenfalls stromführend sind, um eine Heizstrom zu führen oder auch einen Signalstrom.

Es wurde ferner erwähnt, dass auch eine Verdoppelung der Anordnung bei einem zweiarmigen Deckenkreisel 1 möglich ist. In diesem Fall wird eine Anordnung gemäß dem DE 94 14 483 U1 gewählt und jedem Schwenklager 5 für jeden Tragarm 2 ist dann ein separater Rotationsstromverteiler 25 zugeordnet.

### Zeichnungslegende

1 Deckenkreisel
2 Tragarm
3 Rundrohr
4 Seitenplatte
5 Schwenklager
6 Deckenplatte
7 Anschlusshülse (Elektro)
8 Anschlusshülse (Wasser)
9 Anschlusshülse (Elektro)
10 Heizkabel
11 HD-Kabelanschluss
12 Drehgelenk
13 HD-Wasseranschluss
14 Lagerwelle
15 Drehachse
16 Isolationsschlauch
17 Führungsrohr
18 Entlastungszugfeder
19 Drehgelenk
20 Anschlussnippel
21 Befestigungsbohrung
22 Schutzkappe
23 Radiallager oben
24 Radiallager unten
25 Rotationsstromverteiler
26 Innenring
27 Außenring
28 Madenschraube
29 Blockierkugel
30 HD-Schlauch
31 Wasserkanal
32 Längsbohrung (Elektro)
33 Kabelstrang (ein)
34 Schleifring
35 Mantelrohr
36 Kabelstrang (aus)
37 Gehäuse (von 12)
38 Verschlussstopfen (von 12)
39 Ausströmöffnung
40 O-Ring
41 Außengehäuse (von 12)
42 Schraubverbindung
43 Axiallager (von 12)
44 Schraubanschluss (von 12)
45 Schraubhülse
46 Lagerring (oben)
47 Lagerring (unten)
48 Hohlraum
49 Innenraum (von 16)
50 Innenraum (HD-Schlauch 30)
51 Isolationsmantel (von 10)
52 Kabelader
53 Kanal (für Heizpatrone)
54 Signalkabel

## Patentansprüche

1. Beheizbarer Deckenkreisel für Wascheinrichtungen, der an einer an der Decke oder einer Wand einer Waschbox befestigten Lagerwelle (14) drehbar gelagert ist, und aus einem oder mehreren Tragarmen (2) besteht, über die das Waschmedium von der Lagerwelle (14) zu den Arbeitsmitteln in Form von zum Beispiel einer Waschbürste und/oder Sprühlanze führenden HD-Schläuchen (30) zugeleitet wird, wobei die HD-Schläuche (30) elektrisch beheizbar ausgebildet sind, und für die Zuführung der elektrischen Energie von der stationären Lagerwelle (14) zu den drehbar an dieser gelagerten Tragarmen (2) mindestens ein Rotationsstromverteiler (25) an der Lagerwelle (14) angeordnet ist, **dadurch gekennzeichnet, dass** die elektrische Beheizung über ein Heizkabel (10) erfolgt, das abgedichtet im Innenraum des HD-Schlauches (30) geführt ist und dass über den mindestens einen Rotationsstromverteiler (25) die elektrischen Leitungen für das Heizkabel (10) geführt sind sowie elektrische Signalkabel, die mit dem HD-Schlauch (30) innen- oder außenliegend mitgeführt sind.

2. Deckenkreisel nach Anspruch 1, **dadurch gekennzeichnet, dass** der Deckenkreisel (1) zusammen mit seinem Heizkabel (10) um beliebig Vielfache von 360 Grad drehbar ist.

3. Deckenkreisel nach Anspruch 1 oder 2, **dadurch gekennzeichnet, dass** an der Deckenseite des Deckenkreisels (1) mindestens ein Stromkabel in den Rotationsstromverteiler (25) eingeführt ist, das ausgangsseitig am drehbaren Teil des Rotationsstromverteilers (25) durch einen Anschlussnippel (9) herausgeleitet ist, und über einen hochdruckdichten HD-Kabelanschluss (11) abgedichtet in den tragarmseitigen HD-Schlauch (30) eingeführt ist.

4. Deckenkreisel nach einem der Ansprüche 1 bis 3, **dadurch gekennzeichnet, dass** das Heizkabel (10) den drehbaren Teil eines Drehgelenks (12) des Deckenkreisels (1) diametral durchsetzt und koaxial in den dort angeschlossenen HD-Schlauch eingeführt ist.

5. Deckenkreisel nach einem der Ansprüche 1 bis 4, **dadurch gekennzeichnet, dass** ein Schwenklager (5) des Deckenkreisels (1) ein außen liegendes Mantelrohr (35) aufweist, welches mit dem drehbaren Teil des Deckenkreisels (1) verbunden ist, und dass am Mantelrohr (35) zwei zueinander parallele Seitenplatten (4) angreifen, die zwischen sich den Tragarm (2) aufnehmen.

6. Deckenkreisel nach einem der Ansprüche 1 bis 5, **dadurch gekennzeichnet, dass** der Tragarm (2) aus einem Metall-Rundrohr (3) besteht, welches an seiner vorderen Mündungsseite mit einem Führungsrohr (17) verbunden ist, durch welches der Hochdruckschlauch (30) hindurch geführt ist.

7. Deckenkreisel nach Anspruch 6, **dadurch gekennzeichnet, dass** an der Ausgangsseite des Führungsrohres (17) das eine Ende einer Entlastungszugfeder (18) befestigt ist, deren anderes Ende fest mit einem Drehgelenk (19) verbunden ist, durch welches der Hochdruckschlauch (30) hindurchgeführt ist.

8. Deckenkreisel nach einem der Ansprüche 1 bis 7, **dadurch gekennzeichnet, dass** das im Innenraum des HD-Schlauches geführte Heizkabel (10) bis in den an einem Anschlussnippel (20) ansetzenden Verbindungsschlauch für den Anschluss der Arbeitsmittel hinein reicht.

9. Deckenkreisel nach einem der Ansprüche 1 bis 8, **dadurch gekennzeichnet, dass** der innenliegend beheizte HD-Schlauch (30) an seinem Außenumfang von einem wärmeisolierenden Isolationsschlauch (16) umgeben ist.

## Claims

1. Heatable ceiling boom for washing devices, which is rotatably mounted on a bearing shaft (14) attached on the ceiling or a wall of a wash box, and consists of one or more support arms (2), via which the washing medium is supplied from the bearing shaft (14) to the operating means in the form of high-pressure hoses (30) leading, for example to a washing brush and/or spray lance, wherein the high-pressure hoses (30) are designed to be electrically heatable, and at least one rotational power distributor (25) is arranged on the bearing shaft (14) for supply of electrical energy from the stationary bearing shaft (14) to the support arms (2) mounted rotatably on the latter, **characterised in that** the electrical heating is effected via a heating cable (10) which is guided in sealed manner in the interior of the high-pressure hose (30) and **in that** the electrical wires for the heating cable (10) are guided via the at least one rotational power distributor (25) as well as electrical signal cables, which are also guided internally or externally with the high-pressure hose (30).

2. Ceiling boom according to claim 1, **characterised in that** the ceiling boom (1) together with its heating cable (10) is rotatable about arbitrary multiples of 360 degrees.

3. Ceiling boom according to claim 1 or 2, **characterised in that** at least one power cable, which is led out through a connection nipple (9) on the rotatable part of the rotational power distributor (25) on the output side, is introduced into the rotational power distributor (25) on the ceiling side of the ceiling boom (1), and is introduced into the high-pressure hose (30) on the support arm side in sealed manner via a high pressure-tight high-pressure cable connection (11).

4. Ceiling boom according to one of claims 1 to 3, **characterised in that** the heating cable (10) passes diametrally through the rotatable part of a pivot joint (12) of the ceiling boom (1) and is introduced coaxially into the high-pressure hose connected there.

5. Ceiling boom according to one of claims 1 to 4, **characterised in that** a pivot bearing (5) of the ceiling boom (1) has an outer jacket tube (35) which is connected to the rotatable part of the ceiling boom (1), and **in that** two side plates (4) parallel to one another, which receive the support arm (2) between them, act upon the jacket tube (35).

6. Ceiling boom according to one of claims 1 to 5, **characterised in that** the support arm (2) consists of a round metal tube (3) which is connected on its front opening side to a guide tube (17), through which the high-pressure hose (30) is guided.

7. Ceiling boom according to claim 6, **characterised in that** the one end of a relief tension spring (18), the other end of which is connected firmly to a pivot joint (19), through which the high-pressure hose (30) is guided, is attached on the output side of the guide tube (17).

8. Ceiling boom according to one of claims 1 to 7, **characterised in that** the heating cable (10) guided in the interior of the high-pressure hose extends into the connecting hose attached on a connection nipple (20) for connecting the operating means.

9. Ceiling boom according to one of claims 1 to 8, **characterised in that** the internally heated high-pressure hose (30) is surrounded on its outer circumference by a heat-insulating insulation hose (16).

## Revendications

1. Rampe tournante plafonnière pour dispositifs de lavage qui est montée à rotation sur un arbre de montage (14) fixé au plafond ou à une paroi d'une station de lavage, et se compose d'un ou plusieurs bras porteurs (2) par lesquels l'agent de lavage est amené de l'arbre de montage (14) jusqu'aux équipements de travail en forme de tuyaux haute pression (30) menant par exemple à une brosse de lavage et/ou à une lance d'aspersion, dans lequel les tuyaux haute pression (30) sont formés électriquement chauffables, et pour l'amenée de l'énergie électrique de l'arbre de montage (14) stationnaire aux bras porteurs (2) montés à rotation sur celui-ci est disposé sur l'arbre de montage (14) au moins un répartiteur de courant à rotation (25), **caractérisée en ce que** le chauffage électrique se fait par un câble chauffant (10) qui est guidé de manière étanche dans l'espace intérieur du tuyau haute pression (30) et **en ce que** par le au moins un répartiteur de courant à rotation (25) sont guidées les lignes électriques pour le câble chauffant (10) ainsi que les câbles de signaux électriques qui sont entraînés, à l'intérieur ou à l'extérieur, avec le tuyau haute pression (30).

2. Rampe tournante plafonnière selon la revendication 1, **caractérisée en ce que** la rampe tournante plafonnière (1) est apte à tourner conjointement avec son câble chauffant (10) de n'importe quels multiples de 360 degrés.

3. Rampe tournante plafonnière selon la revendication 1 ou 2, **caractérisée en ce que** sur le côté plafond de la rampe tournante plafonnière (1) est introduit dans le répartiteur de courant à rotation (25) au moins un câble électrique qui sort côté sortie sur la partie rotative du répartiteur de courant à rotation (25) à travers un manchon de raccordement (9) et est introduit de manière étanche par un raccord de câble haute pression (11) étanche à la haute pression dans le tuyau haute pression (30) côté bras porteur.

4. Rampe tournante plafonnière selon l'une des revendications 1 à 3, **caractérisée en ce que** le câble chauffant (10) traverse diamétralement la partie rotative d'une articulation tournante (12) de la rampe tournante plafonnière (1) et est introduit coaxialement dans le tuyau haute pression raccordé à cet endroit.

5. Rampe tournante plafonnière selon l'une des revendications 1 à 4, **caractérisée en ce qu'**un palier de pivotement (5) de la rampe tournante plafonnière (1) comporte un tube fourreau (35) situé à l'extérieur, qui est relié à la partie rotative de la rampe tournante plafonnière (1), et **en ce que** sur le tube fourreau (35) viennent en prise deux plaques latérales (4) parallèles l'une à l'autre qui reçoivent entre elles le bras porteur (2).

6. Rampe tournante plafonnière selon l'une des revendications 1 à 5, **caractérisée en ce que** le bras porteur (2) se compose d'un tube rond en métal (3) qui est relié sur son côté ouverture avant à un tube de guidage (17) à travers lequel est guidé le tuyau haute pression (30).

7. Rampe tournante plafonnière selon la revendication 6, **caractérisée en ce que** sur le côté sortie du tube de guidage (17) est fixée une extrémité d'un ressort de traction de décharge (18) dont l'autre extrémité est reliée de manière fixe à une articulation tournante (19) à travers laquelle le tuyau haute pression (30) est guidé.

8. Rampe tournante plafonnière selon l'une des revendications 1 à 7, **caractérisée en ce que** le câble chauffant (10) guidé dans l'espace intérieur du tuyau haute pression va jusque dans le tuyau de liaison appliqué sur le manchon de raccordement (20), pour le raccordement des équipements de travail.

9. Rampe tournante plafonnière selon l'une des revendications 1 à 8, **caractérisée en ce que** le tuyau haute pression (30) chauffé à l'intérieur est entouré sur sa circonférence extérieure par un tuyau d'isolation calorifuge (16).
